# EUROPEAN PATENT SPECIFICATION

(11) **EP 0 671 832 B1**
(45) Date of publication and mention of the grant of the patent: **01.06.2005**
(21) Application number: 95106656.2
(22) Date of filing: 27.08.1991
(51) Int. Cl.: H04L 12/26, H04L 12/56

(54) **Apparatus for testing ATM channels**
Gerät zum Testen von ATM-Vermittlungskanälen
Dispositif pour tester des canaux ATM

(30) Priority: 27.08.1990 JP 22242590; 20.10.1990 JP 28262890; 20.10.1990 JP 28304390
(43) Date of publication of application: 13.09.1995
(62) Divisional of application: 91114341.0
(73) Proprietor: FUJITSU LIMITED, Kawasaki-shi, Kanagawa 211 (JP)
(72) Inventor: Uchida, Yoshihiro, Takatsu-ku, Kawasaki-shi, Kanagawa 213 (JP); Kakuma, Satoshi, Kawasaki-shi, Kanagawa 211 (JP); Izawa, Naoyuki, Mitaka-shi, Tokyo 181 (JP); Aso, Yasuhiro, Tokyo 176 (JP); Yoshimura, Shuji, Kawasaki-shi, Kanagawa 213 (JP); Murayama, Masami, Yokohama-shi, Kanagawa 227 (JP)
(74) Representative: Lehn, Werner, Dipl.-Ing.

(56) References cited:
- EP-A- 0 351 014
- US-A- 4 486 877
- R.W. MUISE ET AL.: "Experiments in wideband packet technology" 1986 INTERNATIONAL ZURICH SEMINAR ON DIGITAL COMMUNICATIONS, 11 - 13 March 1986, ZÜRICH, CH; , pages 135-139, XP002037845
- "Method and arrangement for testing switch-network components" IBM TECHNICAL DISCLOSURE BULLETIN, vol. 31, no. 8, January 1989, ARMONK, NY, US, pages 414-427, XP002037846

## Description

### Background of the Invention

### Field of the Invention

This invention pertains to a digital switching system and more particularly to an apparatus for testing ATM (Asynchronous Transfer Mode) channels, according to a multi-stage self-routing method, to integrally switch information having different traffic characteristics, such as moving images, numerical data and voices, by using an ATM transmission system like a broadband ISDN.

### Description of the Related Art

With the widespread use of data communication, public switched networks are now required to execute high-quality data communication, as well as the traditional voice communication.

A Broadband Integrated Services Digital Network (B-ISDN) has begun to be utilized as a communication network not only for low-speed data, such as voice data, but also for high-speed data between 150 Mbps and 600 Mbps, such as moving images, and various interfaces have begun to be standardized. CCITT (International Telegraph and Telephone Consultative Committee) is currently working on its advisory report on the ATM transmission system, which is an essential technology for realizing a B-ISDN, to be submitted in 1992.

An ATM communication network transmits and exchanges information of different bands divided and housed in fixed-length data units called cells, to which headers are added. A header contains a virtual channel identifier (VCI) for identifying the receiving side subscriber. Thus, an ATM switching system uses the headers to enable hardware to transfer and switch cells to the receiving side subscriber at a high speed.

Since an ATM system requires cells to carry only necessary information, it can more efficiently transmit burst signals than a conventional STM (Synchronous Transfer Mode) system. Also, unlike a conventional packet switching system that has a processor to switch cells equivalent to packets through software processing, since an ATM system has hardware provided in a channel switch cells, it does not require complex protocols in switching cells, which realizes high speed communication at up to several hundred mega bits a second.

This makes it possible to flexibly provide services requiring different transmission speeds, and to efficiently utilize transmission paths.

In this operation, according to the VCI attached to a cell, a switching system processor designates to which buffer in a switch of the ATM switching system the cell is to be written. The cells flow autonomously in the network according to this designation. Hence, this switching operating is called a self-routing (SR). The receiving side subscriber extracts necessary cells flowing over ATM highways based on the VCIs attached to cells, and restores user information by eliminating headers from the cells.

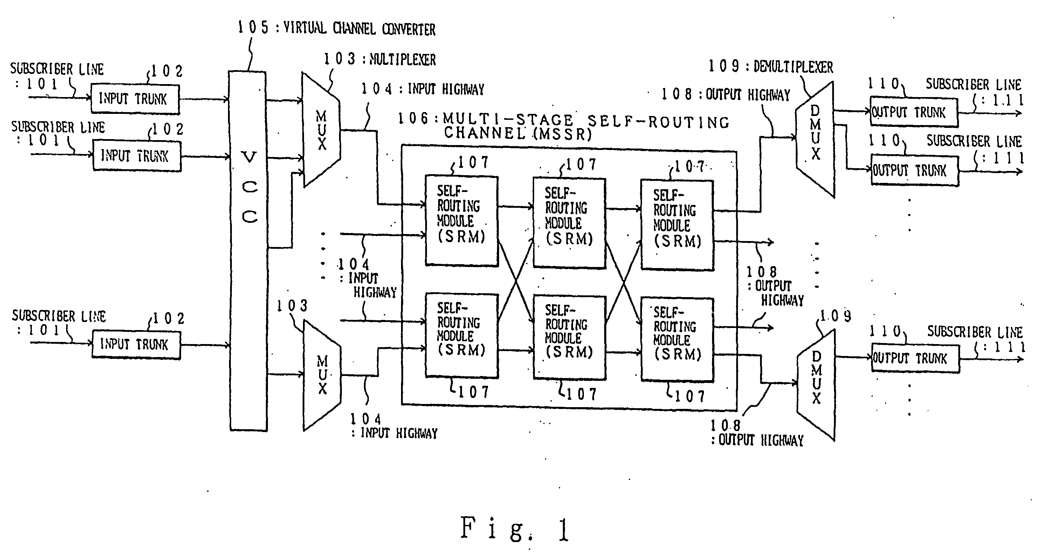

Figure 1 is a schematic view of a generic ATM switching system.

In Figure 1, trunks 102 accommodate respective subscriber lines 101 on the input side. A virtual channel controller (VCC) 105 receives outputs from the trunks 102.

Based on the call control information inputted from a processor (not shown) of the switching system, the VCC 105 exchanges the VCIs, which specify the cells' destinations, attached to the headers of the received cells for the respective input highways 104, with new VCIs specifying the next output node (ATM switching system). At the same time, the VCC 105 adds to the head ends of the cells information specifying the path over which the cells are to be switched to be outputted to destined output highways 108 in a data format called tags.

A plurality of multiplexers (MUXs) 103 partially multiplex respective outputs from the VCC 105. Respective input highways 104 receive outputs from the corresponding multiplexers 103.

A multi-stage self-routing channel (MSSR) 106, which is a virtual channel, receives respective outputs from the MUXs 103. The MSSR 106 comprises a plurality of self-routing modules (SRMs) 107. The MSSR 106 has a plurality (ordinarily two (2) rows and three (3) stages) of SRMs 107. The configuration of the SRMs 107 are further elaborated later.

The MSSR cells to output highways 108, which are connected to respective demultiplexers (DMUXs) 109, which demultiplex the cells and output the demultiplexed cells to subscriber lines 111 on the output side through output trunks 110 corresponding to the respective DMUXs 109.

Figure 1 shows a configuration where cells flow in a single direction over the channels. It goes without saying that channels for cells flowing in the opposite directions can be configured similarly.

Figure 2 shows an exemplary configuration of one of the SRMs 107 shown in Figure 1.

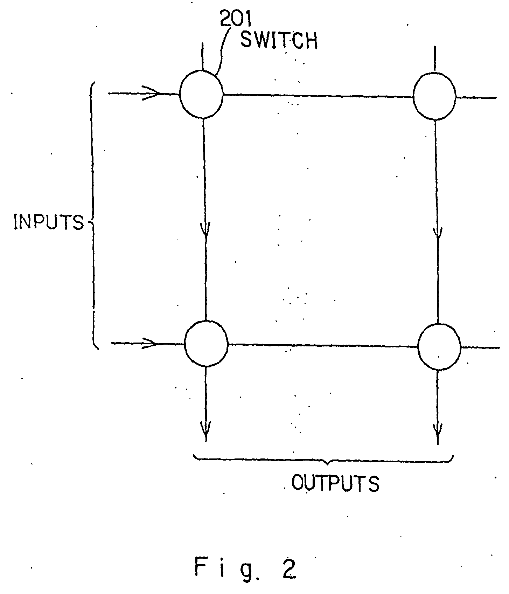

In the example shown in Figure 2, an SRM 107 has two (2) input lines and two (2) output lines, and switches 201 provided at the four (4) crossing points of the input lines and output lines. That is, the four (4) switches of an SRM 107 correspond with two (2) input lines and two (2) output lines. Although an actual channel comprises more input lines and more output lines in reality, since their basic connections are entirely similar to those in the example shown in Figure 2, the SRMs 107 are explained by referring to the 2X2 exemplary configuration having two (2) input lines and two (2) output lines.

The switches 201 judge from the tag data attached to the head ends of cells inputted from input lines whether or not to switch the cells for acceptance. If the switches 201 judge to switch the cells, the switches 201 multiplex the cells on free time slots on output lines. Respective switches 201 independently perform the judging and switching operations through hardware processing.

As is evident from the above explanation, a fault in one of the switches 201 in any of the SRMs 107 shown in Figure 1 causes a severe fault, such as a degradation in communication quality and a stoppage of communication through discarding ATM cells and incorrectly switching ATM cells. Therefore, it is crucial to conduct a test for verifying the normality of the switches.

However, there is no known conventional system for efficiently testing the switches of an ATM switching system. Especially in the configuration, shown in Figure 1, of the MSSR 106 having the SRMs 107 connected in a plurality of stages, the more there are possible paths from an input line to an output line, the more there are the SRMs 107 in the MSSR 106. This causes an inevitable problem of how to efficiently test all such possible paths in realizing an ATM switching system.

In US-A-4,486,877 there is disclosed a communication method and packet switching system in which packets comprising logical addresses and voice-data information are communicated through the system by packet switching networks which are interconnected by high-speed digital trunks with each of the latter being directly terminated on both ends by trunk controllers. During initial call set-up of a particular call, central processors associated with each network in the desired route store the necessary logical to physical address information in the controllers which perform all logical to physical address translations on packets of the call. Each processor has the capability of doing fault detection. In particular there is disclosed a method of conducting a test in a manner in which the central processor generates and transmits a test cell to an associated network and checks on the test cell coming back from the network.

In the paper entitled "Experiments in wideband packet technology" presented by R.W. Muise et al at the 1986 International Zurich Seminar on Digital Communications, 11-13 March 1986, Zurich, Switzerland on pages 135-139 of the proceedings thereof, there is disclosed an experimental integrated package voice data image network employing technology based on advanced speed processing methods and high capacity low delay packet switching. An access interface converts analogue voice to packet voice and interfaces various types of packetised data sources.

In the IBM Technical Disclosure Bulletin entitled "Method and arrangement for testing switch-network components", vol. 31, no. 8, January 1989 on pages 414-427, there is described a parallel processor system operating with packet switching of messages, an essential part is the switch-network interconnecting the various processing and memory elements. A method is described for testing switch network components at high speeds, together with the design of test-messages to facilitate such testing.

### Summary of the Invention

This invention is conceived based on the above background, and aims at efficiently testing all paths in an ATM channel configured by respective switches.

According to the present invention there is provided an ATM channel testing apparatus for testing a plurality of ordinary trunks for interfacing with foreign offices and an asynchronous transfer mode channel for switching cells inputted from plural input highways through said ordinary trunks to a plurality of output highways, characterized by: a test cell generating trunk means, provided on the input side of said asynchronous transfer mode channel, for generating a test cell whose header part has a test cell identification bit identifying itself as a test cell and for supplying said test cell to said asynchronous transfer mode channel; and turnaround means provided respectively in said ordinary trunks, for extracting said test cell by extracting said test cell identification bit from cells sent through said asynchronous transfer mode channel, and for turning said extracted test cell around to paths to be tested on said asynchronous transfer mode channel, and wherein: said test cell generating trunk means is adapted to store, in an information part of said test cell, path selection information including a trunk number and a path number on the ATM channel specifying the paths to be tested in said asynchronous transfer mode channel: said ATM channel testing apparatus further comprising a tag operating means for replacing a tag attached to the head end of said test cell, turned around by any one of said turnaround means in said ordinary trunks, with another based on said path selection information stored in said information part of said test cell, and for supplying said test cell to said asynchronous transfer mode channel.

The test cell generating trunk may store in the information parts of test cell path selection data specifying the test paths in the asynchronous transfer mode channel. In addition to the above configuration, a tag operator can be provided between the turnaround parts and the asynchronous transfer mode channel. The tag operator replaces the tags attached to the head ends of the test cells turned around by the turnaround part in an ordinary trunk with others based on the route selection data stored in the information parts of the test cells, and then supplies the reconfigured test cells to the asynchronous transfer mode channel.

Further, the test cell generating trunk may store in the information parts of test cell path selection data specifying the test paths, terminated at the test cell generating trunk, in the asynchronous transfer mode channel. In addition to the above configuration, a controller for testing an asynchronous transfer mode channel can be provided at the test cell generating trunk. It judges whether or not test cells generated by the test cell generating trunk return to the test cell generating trunk. It compares the contents of the test cells generated from the test cell generating trunk with the contents of the test cells returned to the test cell generating trunk.

The invention enables an asynchronous transfer mode channel to be tested with lesser hardware comprising only a test cell generating trunk and turnaround parts respectively provided in ordinary trunks, because test cells generated from a test cell generating trunk are sequentially turned around in the turnaround parts in ordinary trunks to be returned finally to the test cell generating trunk.

### Brief Description of the Drawings

Those in the same field can easily understand additional purposes and features of this invention from the descriptions of the principles and the preferred embodiment of this invention together with the attached drawings. In the drawings;
Figure 1 is a schematic view of a generic ATM switching system;
Figure 2 shows an exemplary configuration of one of the SRMs shown in Figure 1;

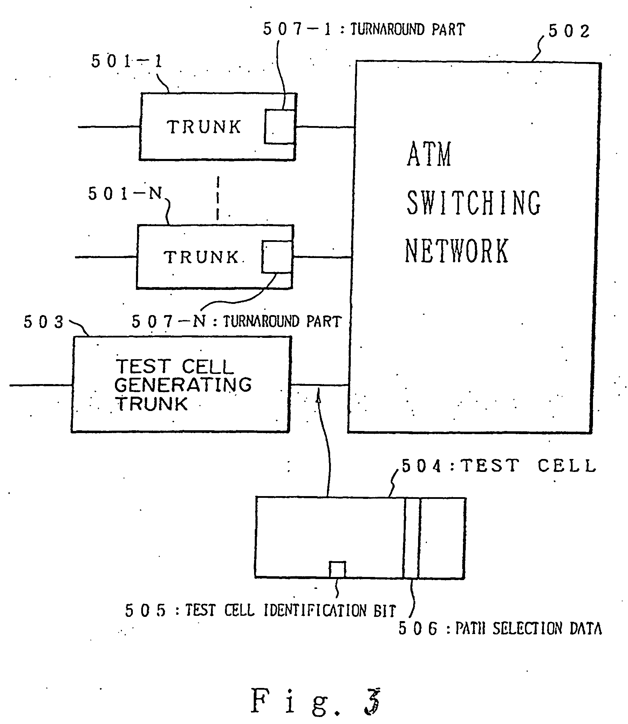

Figure 3 is a schematic view for explaining the invention;

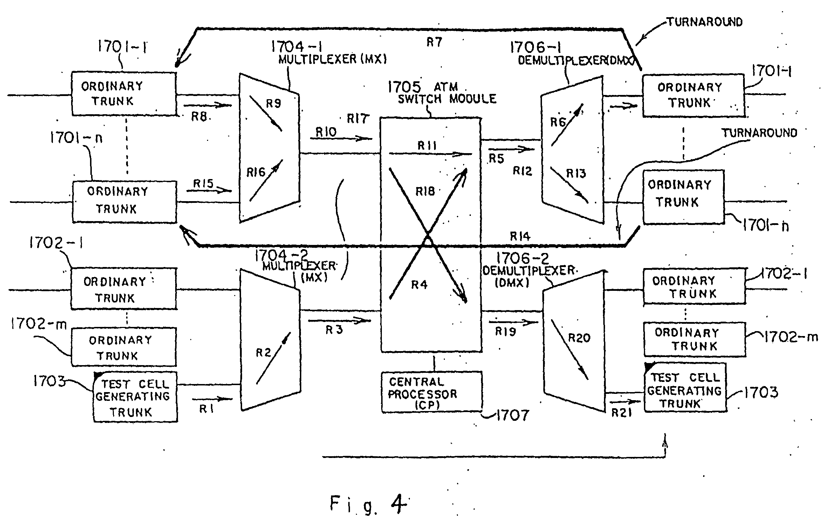

Figure 4 is a block diagram of a preferred embodiment of this invention;

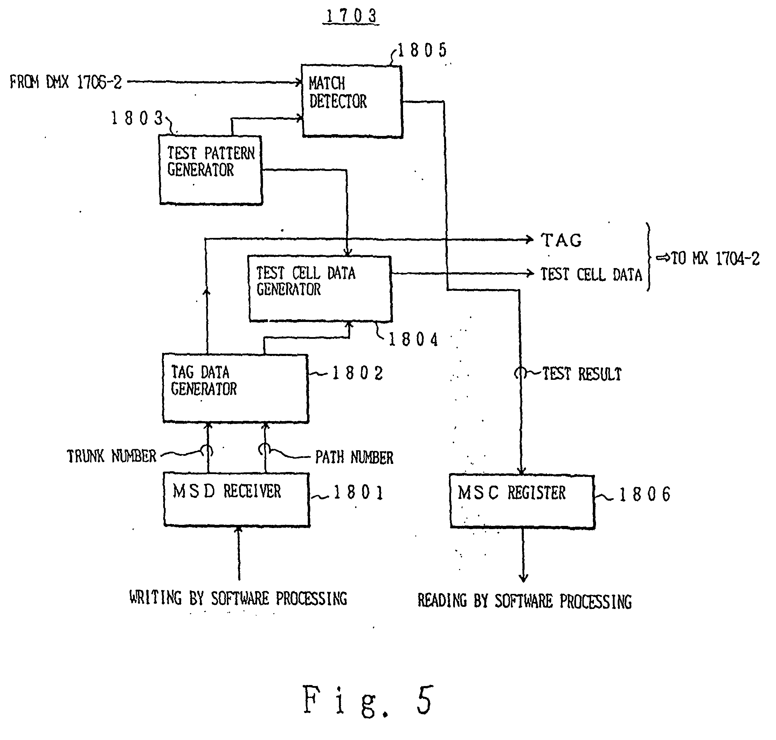

Figure 5 shows the configuration of the test cell generating trunk in the preferred embodiment;

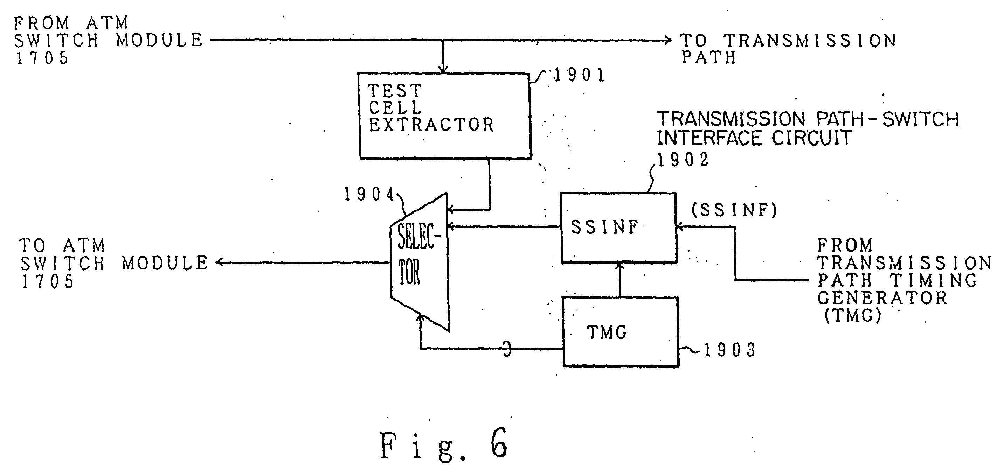

Figure 6 shows the configuration of the turnaround part of a tested trunk in the preferred embodiment;

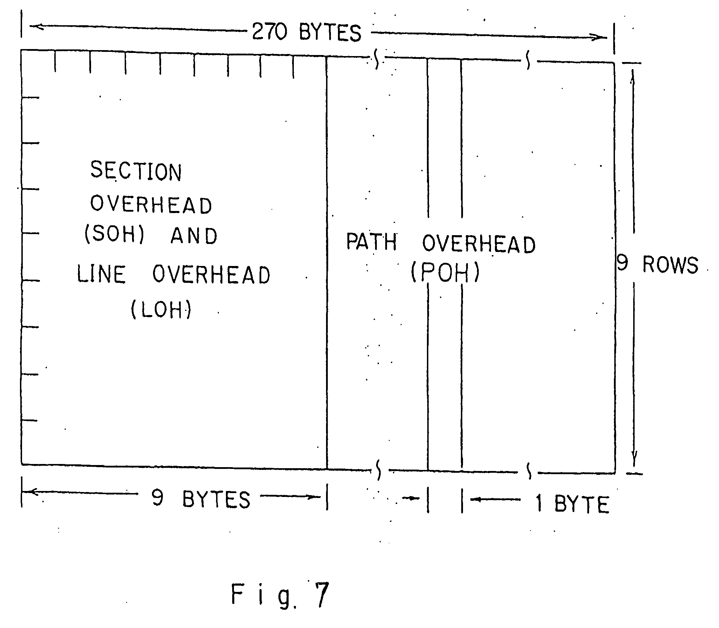

Figure 7 shows the data format of a transmission path in the preferred embodiment;

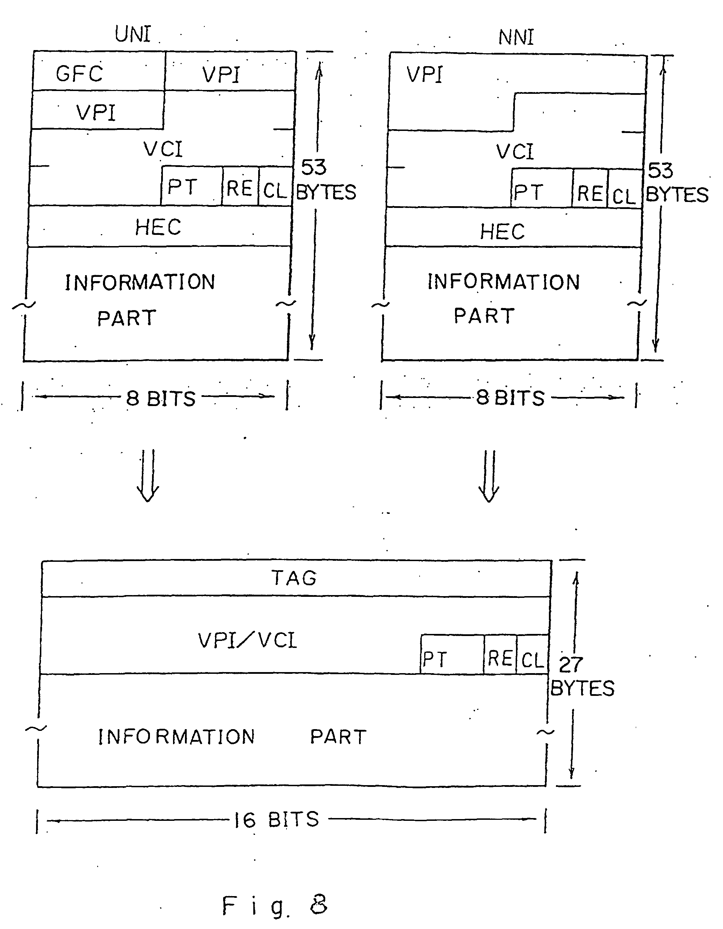

Figure 8 illustrates the cell format conversion in the preferred embodiment; and

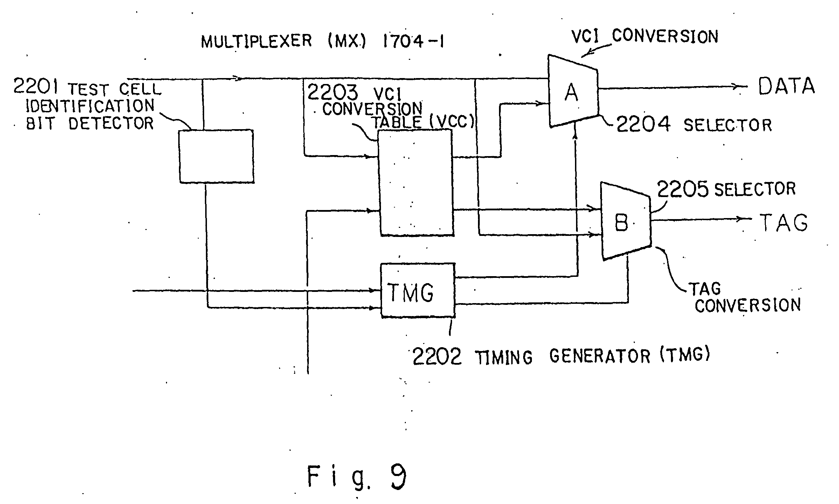

Figure 9 shows the configuration of the tag operator in a multiplexer in the preferred embodiment.

### Description of the Preferred Embodiments

### Explanation of the Principles

Before describing the preferred embodiment of this invention, its principles are explained with reference to Figure 3.

501-1 through 501-N are plural trunks for interfacing with other offices. 502 is an ATM switching network. 503 is a test cell generating trunk. 504 is a test cell outputted from a test cell generating trunk 503. 505 is a test cell indication bit in the test cell 504 for test cell identification. 506 is a path selection data for specifying the path to be tested.

The turnaround parts 507-1 through 507-N are provided in the trunks 501-1 through 501-N respectively connecting external transmission paths and ATM switching network 502. When the test cell indication bits 505 in the test cells 504 from cells transmitted through the ATM switching network 502 are detected, the turnaround parts 507-1 through 507-N turn the extracted test cells 504 around to the paths to be tested in the ATM switching network 502.

The test cell generating trunk 503 is provided on the input side of the ATM switching network 502. It generates a test cell 504 whose header part has the test cell identification bit 505 for test cell identification and supplies it to the ATM switching network 502.

Upon receipt of a test cell 504 and detection of a test cell identification bit 505, the turnaround part 507-i in the trunk 501-i (1≦i≦N), the turnaround part 507-i turns the extracted test cell 504 around to the paths to be tested corresponding to the path selection data 506 attached to the received test cell 504.

By judging whether or not the ATM switching network 502 returns test cell 504 to the test cell generating trunk 503 that generates the test cell 504 in a predetermined period of time, it can be tested whether or not the path set for the test cell 504 is normal.

### Explanation Of A Preferred Embodiment

Figure 4 is a block diagram of a preferred embodiment of this invention. This configuration of an ATM switching system corresponds to that shown in Figure 3, which is a schematic view for explaining this invention.

In Figure 4, 1701-1 through 1701-N and 1702-1 through 1702-M are ordinary trunks, 1703 is a test cell generating trunk, 1704-1 and 1704-2 are multiplexers, 1705 is an ATM switch module, 1706-1 and 1706-2 are demultiplexers, and 1707 is a central processor (CP).

Between the outside of the trunks 1701-1 through 1701-N and 1702-1 through 1702-M, i.e. other offices or subscribers, and this ATM switching system, signals are transmitted over the transmission paths according to an interoffice protocol such as the SONET (Synchronous Optical Network) protocol. The ordinary trunks 1701-1 through 1701-N and 1702-1 through 1702-M respectively extract an ATM cell from a signal on the transmission paths and send the ATM cells to the ATM switch module 1705 through either multiplexer 1704-1 or 1704-2. The ATM cell switched by the ATM switch module 1705 is sent through demultiplexer 1706-1 to the respective ones of ordinary trunks 1701-1 through 1701-N or through demultiplexer 1706-2 to the respective ones of ordinary trunks 1702-1 through 1702-M, and the ordinary trunks 1701-1 through 1701-N and 1702-1 through 1702-M in turn send the ATM cell to the transmission paths.

The paths from input trunks to output trunks are set in a plurality according to the size of the ATM switch module 1705, which are determined by a tag attached at the entrance of either multiplexer 1704-1 or 1704-2.

The test cell generating trunk 1703 generates a test cell with its test cell identification bit set at a predetermined position in the header part turned on, tag data giving an instruction of a predetermined test pattern and tested path stored in its information part, and a tag showing the first trunk number existing on the tested path attached before the header part, upon receiving from the central processor (CP) 1707, as a maintenance command called maintenance signal distributor (MSD), a path testing instruction, trunk numbers of the tested trunks, path numbers of the tested paths on the ATM switch module 1705.

The ATM switch module 1705 switches the test cell according to the tag attached before the header part and transfers it to a first tested ordinary trunk, e.g. ordinary trunk 1701-1.

The first tested ordinary trunk 1701-1 monitors the header part in respective cells sent from the ATM switch module 1705. Upon detecting a test cell identification bit being on, the tested trunk 1701-1 judges an input of a test cell and turns the test cell around to a line on the input side of the ATM switch module 1705.

During the turnaround, multiplexer 1704-1 extracts a tag indicating the trunk number of the second trunk existing on the tested path from the tag data stored in the information part of the test cell and reattaches the tag before the header part of the test cell. Accordingly, the ATM switch module 1705 switches the test cell turned around by the first tested ordinary trunk 1701-1 according to the reattached tag and sends it to the second tested ordinary trunk, e.g. 1701-N, on the tested path.

Similarly, the test cell is sequentially transferred to the respective trunks on the tested path and turned around. When the test cell is turned around by the last trunk on the tested path, either multiplexer 1704-1 or 1704-2 extracts a tag indicating the test cell generating trunk 1703 which is the final end of the tested path from the tag data stored in the information part of the test cell, and reattaches the tag before the header part of the test cell.

As a result, the test cell returns in the end to the test cell generating trunk 1703, which judges whether or not the tested path is normal by detecting whether or not the content of the information part of the test cell before the test cell is emitted is the same as that after the test cell returns.

Figure 4 shows an exemplary sequence from R1 to R21 as the path tested by the test cell.

Although Figure 4 shows, for convenience, the ordinary trunks 1701-1 through 1701-N and 1702-1 through 1702-M as well as the test cell generating trunk 1703 have separate reception trunks for receiving signals from other offices and emission trunks for emitting signals to other offices, the reception trunks and emission trunks are actually the receiving parts and emitting parts within the same trunks.

Figure 5 shows the configuration of the test cell generating trunk 1703 in the preferred embodiment.

In Figure 5, an MSD receiver 1801 receives a maintenance signal distributor (MSD) for path test instruction set in the central processor (CP) 1707 when the ATM switch module 1705 is tested.

A tag data generator 1802 generates tag data, on receipt of the path number of the tested path and the trunk number of the tested trunk on the tested path.

A test pattern generator 1803 generates a predetermined test pattern attached to the information part of a test cell.

A test cell data generator 1804 generates test cell data attached to the information part of a test cell, based on the tag data from the tag data generator 1802 and the test pattern from the test pattern generator 1803.

A match detector 1805 detects a match between the test pattern generated by the test pattern generator 1803 and the test pattern stored in the information part of a test cell from demultiplexer (DMX) 1706-2 (Figure 4).

An MSC (Maintenance Scan) register 1806 stores the comparison result obtained by the match detector 1805.

The test cell generating trunk 1703 having the configuration shown in Figure 5 is used below for explaining the operations of testing the ATM switching system shown in Figure 4, which assumes existence of two (2) tested trunks A (e.g. ordinary trunk 1701-1) and B (e.g. ordinary trunk 1701-2), in addition to the test cell generating trunk 1703, on the tested path.

The MSD receiver 1801 in the test cell generating trunk 1703 receives from the central processor (CP) 1707 the trunk numbers of the tested trunks A (e.g. ordinary trunk 1701-1) and B (e.g. ordinary trunk 1701-2) and the path number in the ATM switch module 1705 from trunk A to trunk B.

Based on the above information, the tag data generator 1802 generates three (3) tags for the tested paths, namely, the tag for the path from the test cell generating trunk 1703 to tested trunk A, the tag for the path from tested trunk A to tested trunk B, and the tag for the path from tested trunk B to the test cell generating trunk 1703. The tag data generator 1802 outputs to multiplexer 1704-2 the tag for the path from the test cell generating trunk 1703 to tested trunk A as the tag to be attached before the header part of the test cell. The tag data generator 1802 outputs to the test cell data generator 1804 all other tags as a part of the information part of the test cell. The test cell data generator 1804 outputs to multiplexer 1704-2 (Figure 4) the above tag data together with the test pattern from the test pattern generator 1803 as test cell data.

Multiplexer 1704-2 (Figure 4) generates a test cell having a tag for the path from the test cell generating trunk 1703 to the trunk A attached before the header part with its test cell identification bit set at a predetermined position in the header part turned on and the test cell data from the test cell data generator 1804 stored in its information part. As described above, the test cell data comprise respective data of the test pattern, the tag for the path from tested trunk A to tested trunk B and the tag for the path from tested trunk B to the test cell generating trunk 1703.

The following is a description of the actions when the tested paths are normal.

First, a test cell is sent through multiplexer 1704-2, the ATM switch module 1705 and demultiplexer 1706-1 to tested trunk A (e.g. ordinary trunk 1701-1) which is one of the two (2) tested trunks.

Tested trunk A returns the received test cell to the ATM switch module 1705 instead of transferring it to a foreign office. At this time, multiplexer 1704-1 extracts from the information part of the returned test cell the tag for the path from tested trunk A to tested trunk B and replaces the tag for the path from test cell generating trunk 1703 to tested trunk A attached before the header part of the returned test cell with the extracted tag.

Thus, the returned test cell is sent to tested trunk B (e.g. ordinary trunk 1701-N) through multiplexer 1704-1, the ATM switch module 1705 and demultiplexer 1706-1, according to the replaced tag.

Tested trunk B returns the received test cell to the ATM switch module 1705 instead of transferring it to a foreign office. At this time, multiplexer 1704-1 extracts from the information part of the returned test cell the tag for the path from tested trunk B to the test cell generating trunk 1703 and replaces the tag for the path from tested trunk A to tested trunk B attached before the header part of the returned test cell with the extracted tag.

Thus, the returned test cell is sent to the test cell generating trunk 1703 through multiplexer 1704-1, the ATM switch module 1705 and demultiplexer 1706-1, according to the replaced tag.

The match detector 1805 in the test cell generating trunk 1703 compares the test pattern attached to the information part of the test cell returned after passing through tested trunks A and B as well as the ATM switch module 1705 with the test pattern generated by the test pattern generator 1803. If they both match, it is confirmed that the test paths including the ATM switch module 1705 are normal. Also the fact that the test cell is returned in a predetermined period of time proves that the normality of the tag paths.

The MSC register 1806 stores the above described test result. The central processor (CP) 1707 regularly monitors the content of the MSC register 1806 by software processing.

Figure 6 shows the configuration of the turnaround part of a tested trunk, which is one of the ordinary trunks 1701-1 through 1701-N and 1702-1 through 1702-M, in the preferred embodiment.

In Figure 6, 1901 is a test cell extractor, 1902 is a transmission path - switch interface circuit (SSINF) for converting frame data format in the SONET format to a data format comprising solely a cell, 1903 is a timing generator (TMG), 1904 is a selector for selectively outputting the output from the test cell extractor 1904 or the output from the transmission path - switch interface circuit (SSINF) 1902 according to the clock signals from the timing generator (TMG) 1903.

The test cell extractor 1901 monitors whether or not the header part of the cell received from the ATM switch 1705 has a test cell identification bit, extracts the cell when the test cell identification bit is on, and stores the cell in an internally provided buffer (not shown).

Since the transmission path - switch interface circuit (SSINF) 1902 extracts only the cell part in the frame data of the SONET format transferred from a foreign office or a subscriber over a transmission path and does not extract the header part such as a SOH (Section Overhead), a LOH (Line Overhead) and a POH (Path Overhead), the input periods for a SOH, a LOH and a POH remain free. Therefore, the timing generator (TMG) 1903 detects the free periods and causes the selector 1904 to output to the ATM switch module 1705 the test cell stored in the test cell extractor 1901 during the free periods. This enables the paths in an ATM switching system to be tested even when ordinary cells other than a test cell are switched.

Figure 7 shows the data format of a transmission path in the preferred embodiment.

The example shown in Figure 7 illustrates SONET STS-3c as the data format on the transmission path. In this case, one (1) frame comprises two-hundred seventy (270) bytes by nine (9) rows, of which two-hundred (260) bytes by nine (9) rows, excepting nine (9) bytes by nine (9) rows for a SOH and one (1) byte by nine (9) rows for a LOH, contain a cell having fifty-three (53) bytes to be transmitted. Therefore, it becomes possible to output a test cell to the ATM switch module 1705 during the input periods for the SOH, LOH and POH.

Figure 8 illustrates the cell format conversion in the preferred embodiment performed by the transmission path - switch interface circuit (SSINF) 1902 shown in Figure 6.

There are UNI (User Node Network) and NNI (Network Node Interface) based cell formats as the data formats for the cell having fifty-three (53) bytes. UNI stands for an interface corresponding to a transmission path connecting a subscriber and a switching system, and NNI stands for an interface corresponding to a transmission paths connecting between switching systems.

The header part, preceding the information part having its data, of the UNI based cell format comprises respective data of GFC (Generic Flow Control), VPI (Virtual Path Identifier), VCI .(Virtual Channel Identifier), HEC (Header Error Control), PT (Payload Type), RE (Reserve) and CL (Cell Loss Priority).

The header part, preceding the information part having its data, of the NNI based cell format comprises respective data of VPI (Virtual Path Identifier), VCI (Virtual Channel Identifier), HEC (Header Error Control), PT (Payload Type), RE (Reserve) and CL (Cell Loss Priority).

As described earlier, the transmission path - switch interface circuit (SSINF) 1902 shown in Figure 6 extracts only the cell part in frame data of the SONET format, and converts the above described UNI or NNI based cell format to the cell format shown in the lower part of Figure 8. The header part, preceding the information part having its data, of this cell format comprises respective data of TAG (Tag), VPI (Virtual Path Identifier), VCI (Virtual Channel Identifier), PT (Payload Type), RE (Reserve) and CL (Cell Loss Priority), shedding HEC (Header Error Control) and GFC (Generic Flow Control) if any. As a result, the cell format is converted to a format of twenty-seven (27) bytes by sixteen (16) bits.

In the preferred embodiment, the ATM switch module 1705 receives both the test cell and ordinary cells from the transmission path in the cell format shown in the lower part of Figure 8. As described earlier, the header part of the test cell has a test cell identification bit and the information part of the test cell has a test pattern and tag data for designating the tested paths.

Figure 9 shows the configuration of the tag operator in multiplexer (MX) 1704-1 or 1704-2 (Figure 4) in the preferred embodiment.

In Figure 9, 2201 is a test cell identification bit detector, 2202 is a timing generator (TMG) for generating a selecting signal when the test cell is detected, 2203 is a VCI conversion table (VCC), and 2204 and 2205 are selectors.

The VCC 2203 replaces the VCIs attached to the header parts of all cells from respective subscribers with the new VCIs specifying the next ATM switching system. The timing generator (TMG) 2202 instructs the replacements to selector 2204. The VCC 2203 attaches to the head ends of the cells tags specifying the respective paths in the ATM switch module 1705 (Figure 4) through which the inputted cells pass to be outputted to the targeted transmission paths. The timing generator (TMG) 2202 instructs the attachments to selector 2205. The VCC 2203 is a table rewritable by software processing. When a subscriber places a call to another, the central processor (CP) 1707 (Figure 4) calculates the tag and the output VCI corresponding to the input VCI corresponding to the call and sets them in the VCC 2203.

In contrast to the ordinary cells processed as described above, the test cell turned around from one of the ordinary trunks 1701-1 through 1701-N (Figure 4) stores in its information part as tag data the tags to be attached to the test cell itself, as described earlier. Thus, when the test cell identification bit detector 2201 in multiplexer (MX) 1704-1 or 1704-2 detects an arrival of the test cell, the timing generator (TMG) 2202 outputs a selecting signal to the selectors 2204 and 2205. This causes selector 2204 to output data in the header part of the test cell in lieu of the new VCIs replaced by the VCC 2203 and selector 2205 to output as a tag a part of the tag data stored in the information part of the test cell in lieu of a tag attached by the VCC 2203.

Thus, multiplexer (MX) 1704-1 or 1704-2 (Figure 4) realizes processing for the test cell.

## Claims

1. An ATM channel testing apparatus for testing a plurality of ordinary trunks (501-1 to 501-N) interfacing with foreign offices and an asynchronous transfer mode channel (502) for switching cells inputted from plural input highways through said ordinary trunks to a plurality of output highways, **characterized by**:
a test cell generating trunk means (503), provided on the input side of said asynchronous transfer mode channel (502), for generating a test cell (504) whose header part has a test cell identification bit (505) identifying itself as a test cell and for supplying said test cell to said asynchronous transfer mode channel (502); and
turnaround means (507-1 to 507-N) provided respectively in said ordinary trunks, for extracting said test cell (504) by extracting said test cell identification bit (505) from cells sent through said asynchronous transfer mode channel (502), and for turning said extracted test cell around to paths to be tested on said asynchronous transfer mode channel (502), and wherein:
said test cell generating trunk means (503) is adapted to store, in an information part of said test cell, path selection information (506) including a trunk number and a path number on the ATM channel specifying the paths to be tested in said asynchronous transfer mode channel (502):
said ATM channel testing apparatus further comprising a tag operating means for replacing a tag attached to the head end of said test cell, turned around by any one of said turnaround means in said ordinary trunks, with another based on said path selection information (506) stored in said information part of said test cell, and for supplying said test cell to said asynchronous transfer mode channel.

2. The ATM channel testing apparatus according to claim 1, wherein:
said test cell generating trunk means (503) is adapted to attach, to the head end of said test cell, the tag addressing the first ordinary trunk on said paths to be tested.

3. The ATM channel testing apparatus according to claim 1, wherein:
said test cell generating trunk means (503) is adapted to store, in an information part of said test cell, path selection information (506) specifying the paths to be tested in said asynchronous transfer mode channel and terminated at said test cell generating trunk means (503):
said ATM channel testing apparatus further comprising a controlling means for testing said asynchronous transfer mode channel by judging whether or not content of a said test cell (504) as generated by said test cell generating trunk means is the same as the content of the test cell as returned to said test cell generating trunk means, by comparing the content of the test cell as generated with the content of the test cell as returned.

4. The ATM channel testing apparatus according to claim 1, wherein:
said turnaround means (507-1 to 507-N) in said ordinary trunks are adapted to turn said extracted test cell around to paths to be tested on said asynchronous transfer mode channel at the corresponding free cell timings of said input highways.

## Patentansprüche

1. An ATM-Kanaltestgerät zum Testen einer Vielzahl gewöhnlicher Fernleitungen (501-1 bis 501-N) verbunden über Schnittstelle mit fremden Dienststellen und einem ATM-Kanal (502) zum Umschalten von Zellen, die von einer Vielzahl von Eingangs-Highways durch die gewöhnlichen Fernleitungen zu einer Vielzahl von Ausgangs-Highways eingegeben werden, **gekennzeichnet durch**:
eine Testzellen erzeugende Fernleitungseinrichtung (503) bereitgestellt an der Eingangsseite des ATM (asynchrones Übertragungsverfahren)-Kanals (502) zum Erzeugen einer Testzelle (504), dessen Headerteil bzw. Kopfteil ein Testzellenidentifizierungsbit (505) aufweist, das sie selbst als eine Testzelle identifiziert, sowie zum Liefern der Testzelle an den ATM-Kanal (502); und
eine Umkehreinrichtung (507-1 bis 507-N) entsprechend bereitgestellt in den gewöhnlichen Fernleitungen zum Extrahieren der Testzelle (504) **durch** Extrahieren des Testzellenidentifizierungsbits (505) von **durch** den ATM-Kanal (502) gesendeten Zellen und zum Umkehren der extrahierten Testzelle zurück zu in dem ATM-Kanal (502) zu testenden Pfaden, und wobei
die Testzellen erzeugende Fernleitungseinrichtung (503) ausgebildet ist zum Speichern, in einem Informationsteil der Testzelle, von Pfadauswahlinformation (506) mit einer Fernleitungsnummer und einer Pfadnummer auf dem ATM-Kanal, was die in dem ATM-Kanal (502) zu testenden Pfade spezifiziert; und
das ATM-Kanaltestgerät ferner eine Markierungsbearbeitungseinrichtung umfasst zum Ersetzen einer an das Kopfende der Testzelle angebrachten Markierung, die **durch** eine der Umkehreinrichtungen in den herkömmlichen Fernleitungen umgekehrt wird, mit einer anderen basierend auf der Pfadauswahlinformation (506) gespeichert in dem Informationsteil der Testzelle, sowie zum Liefern der Testzelle an den ATM-Kanal.

2. Das ATM-Kanaltestgerät nach Anspruch 1, wobei
die Testzellen erzeugende Fernleitungseinrichtung (503) ausgebildet ist, zum Anbringen der Markierung an das Kopfende der Testzelle, die die erste herkömmliche Fernleitung auf den zu testenden Pfaden adressiert.

3. Das ATM-Kanaltestgerät nach Anspruch 1, wobei
die Testzellen erzeugende Fernleitungseinrichtung (503) ausgebildet ist zum Speichern von Pfadauswahlinformation ((506) in einem Informationsteil der Testzelle, die die in dem ATM-Kanal zu testenden Pfade spezifiziert und an der Testzellen erzeugenden Fernleitungseinrichtung (503) beendet wird,
wobei das ATM-Kanaltestgerät ferner eine Steuereinrichtung umfasst zum Testen des ATM-Kanals durch Beurteilen ob ein Inhalt einer der Testzellen (504), wie durch die Testzellen erzeugende Fernleitungseinrichtung erzeugt, der Gleiche ist wie der Inhalt der Testzelle, wie an die Testzellen erzeugenden Fernleitungseinrichtung zurückgekehrt, durch Vergleichen des Inhalts der Testzelle, wie erzeugt mit dem Inhalt der Testzelle wie zurückgekehrt.

4. Das ATM-Kanaltestgerät nach Anspruch 1, wobei
die Umkehreinrichtung (507-1 bis 507N) in den gewöhnlichen Fernleitungen ausgebildet sind zum Umkehren der extrahierten Testzelle zurück zu in dem ATM-Kanal zu testenden Pfaden bei den entsprechenden freien Zellenzeiten der Eingangs-Highways.

## Revendications

1. Appareil de test de canal ATM servant à contrôler une pluralité d'artères d'interconnexion ordinaires (501-1 à 501-N) se trouvant en interface avec des centraux étrangers et un canal en mode de transfert asynchrone (502) servant à faire commuter des cellules introduites depuis plusieurs artères d'interconnexion d'entrée à une pluralité d'artères d'interconnexion de sortie par l'intermédiaire desdites artères d'interconnexion ordinaires, **caractérisé par** :
un moyen (503) formant une artère de génération de cellule de test, placée du côté d'entrée dudit canal en mode de transfert asynchrone (502), servant à produire une cellule de test (504) dont la partie d'en-tête possède un bit d'identification de cellule de test (505) qui l'identifie comme étant une cellule de test et servant à fournir ladite cellule de test audit canal en mode de transfert asynchrone (502) ; et
des moyens d'inversion de transmission (507-1 à 507-N) respectivement placés dans lesdites artères d'interconnexion ordinaires, servant à extraire ladite cellule de test (504) par extraction dudit bit (505) d'identification de cellule de test parmi les cellules envoyées par l'intermédiaire dudit canal en mode de transfert asynchrone (502), et servant à renvoyer en sens inverse ladite cellule de test extraite aux trajets à contrôler sur ledit canal en mode de transfert asynchrone (502), et
où :
ledit moyen formant une artère d'interconnexion (503) de génération de cellule de test est conçu pour mémoriser, dans une partie d'informations de ladite cellule de test, des informations (506) de sélection de trajet comportant un numéro d'artère d'interconnexion et un numéro de trajet sur le canal ATM spécifiant les trajets devant être contrôlés dans ledit canal en mode de transfert asynchrone (502) ;
ledit appareil de test de canal ATM comprenant en outre un moyen d'activation d'étiquette servant à remplacer une étiquette attachée à l'extrémité de tête de ladite cellule d'essai, renvoyée par l'un quelconque desdits moyens d'inversion de transmission dans lesdites artères d'interconnexion ordinaires, par une autre sur la base desdites informations (506) de sélection de trajet qui sont stockées dans ladite partie d'informations de ladite cellule d'essai, et à fournir ladite cellule d'essai audit canal en mode de transfert asynchrone.

2. Appareil de test de canal ATM selon la revendication 1, où :
ledit moyen formant une artère d'interconnexion (503) de génération de cellule d'essai est conçu pour attacher, à l'extrémité de tête de ladite cellule de test, l'étiquette relative à la première artère d'interconnexion ordinaire se trouvant sur lesdits trajets à contrôler.

3. Appareil de test de canal ATM selon la revendication 1, où :
ledit moyen formant une artère d'interconnexion (503) de génération de cellule de test est conçu pour stocker, dans une partie d'informations de ladite cellule de test, des informations (506) de sélection de trajet spécifiant les trajets à contrôler dans ledit canal en mode de transfert asynchrone et se terminant dans le moyen formant une artère d'interconnexion (503) de génération de cellule d'essai ;
ledit appareil de test de canal ATM comprenant en outre un moyen de commande servant à contrôler ledit canal en mode de transfert asynchrone en déterminant si le contenu d'une dite cellule de test (504), telle que générée par ledit moyen formant une artère d'interconnexion de génération de cellule de test est ou non le même que le contenu de la cellule de test telle que renvoyée audit moyen formant une artère d'interconnexion de génération de cellule de test, par comparaison du contenu de la cellule de test telle que générée avec le contenu de la cellule de test telle que renvoyée.

4. Appareil de test de canal ATM selon la revendication 1, où :
lesdits moyens d'inversion de transmission (507-1 à 507-N) se trouvant dans lesdites artères d'interconnexion ordinaires sont conçus pour renvoyer ladite cellule de test extraite aux trajets à contrôler sur ledit canal en mode de transfert asynchrone pour les positionnements temporels de cellules libres correspondants desdites artères d'interconnexion d'entrée.
